# EUROPEAN PATENT APPLICATION

(11) **EP 2 837 599 A1**
(43) Date of publication of application: **18.02.2015**
(21) Application number: 13767414.9
(22) Date of filing: 26.03.2013
(51) Int. Cl.: C01G 23/04, H01L 31/04, H01M 14/00

(54) **TITANIUM OXIDE PASTE**

(30) Priority: 30.03.2012 JP 2012082653; 27.07.2012 JP 2012167534; 26.09.2012 JP 2012212963
(71) Applicant: Sekisui Chemical Co., Ltd., Osaka-shi, Osaka 530-0047 (JP)
(72) Inventor: SASAKI Taku, Mishima-gun Osaka 618-0021 (JP); HORIKI Mayumi, Mishima-gun Osaka 618-0021 (JP); HANEDA Satoshi, Mishima-gun Osaka 618-0021 (JP)
(74) Representative: Hart-Davis, Jason
(86) International application number: PCT/JP2013/058816
(87) International publication number: WO 2013/146791

(57) **Abstract**

The present invention aims to provide a titanium oxide paste which is excellent in printability and which allows for production of a porous titanium oxide layer having a high porosity with a small amount of impurities on the surface thereof even by low-temperature firing, a method of producing a porous titanium oxide laminate using the titanium oxide paste, and a dye-sensitized solar cell.

The titanium oxide paste of the present invention contains titanium oxide particles, a (meth)acrylic resin, and an organic solvent. The paste has a viscosity of 15 to 50 Pa·s and a thixotropic ratio of 2 or greater. A dried mass obtained by heating the paste at a temperature-increasing rate of 10°C/min from 25°C to 300°C in the atmospheric environment contains 1% by weight or less of the (meth)acrylic resin and the organic solvent.

## Description

### TECHNICAL FIELD

The present invention relates to a titanium oxide paste which is excellent in printability and which allows for production of a porous titanium oxide layer having a high porosity with a small amount of impurities on the surface thereof even by low-temperature firing, a method of producing a porous titanium oxide laminate using the titanium oxide paste, and a dye-sensitized solar cell.

### BACKGROUND ART

Solar cells have recently attracted attention as clean energy sources against the backgrounds of exhaustion of fossil fuels and global warming, and thus researchers have actively studied and developed solar cells.

Conventionally put to practical use are silicon-based solar cells typified by single-crystal Si solar cells, polycrystal Si solar cells, amorphous Si solar cells, and the like. Such Si-based solar cells, however, suffer expensiveness and shortage of Si materials. As such problems become clearer, next-generation solar cells are more demanded.

Organic solar cells have recently attracted attention as a solution to the above problems, and dye-sensitized solar cells have especially been in the spotlight. A dye-sensitized solar cell is relatively easy to produce, is formed from a low-cost material, and provides a high photoelectric conversion efficiency. Thus, this solar cell is considered to be a leading candidate as a next-generation solar cell. Conventional dye-sensitized solar cells include a titanium oxide layer as an electrode material. This titanium oxide layer has roles of (1) adsorbing a sensitizing dye, (2) receiving electrons from the excited sensitizing dye, (3) transporting the electrons to a conductive layer, (4) providing a reaction site for electron transfer (reduction) from iodide ions to the dye, and (5) scattering light and confining light. This layer is one of the most important factors for deciding the performance of a solar cell.

With respect to the role (1) of adsorbing a sensitizing dye, the titanium oxide layer needs to adsorb a larger amount of sensitizing dye so as to achieve a higher photoelectric conversion efficiency. This requires the titanium oxide layer to be in a porous form, to have as large a surface area as possible, and to have as small an amount of impurities on the surface as possible. Such a porous titanium oxide layer is usually formed by a method including: printing a paste that contains titanium oxide particles and an organic binder on a base; evaporating the solvent; and removing the organic binder by high-temperature firing. This yields a porous film having many fine pores in the layer with the titanium oxide particles being sintered with each other.

The organic binder used in the paste containing such titanium oxide particles is usually ethyl cellulose from the viewpoint of printability, such as an ability to maintain the dispersion of the titanium oxide particles and the viscosity of the paste. However, complete removal of ethyl cellulose requires a firing treatment at temperatures as high as 500°C or higher. Such high-temperature firing disadvantageously excludes the use of resin bases, the need of which currently increases for the purpose of further cost reduction. In contrast, a low-temperature firing treatment causes the organic binder residue to remain on the surface of the titanium oxide particles, so that the titanium oxide layer fails to adsorb a sensitizing dye, resulting in a very low photoelectric conversion efficiency.

Patent Literature 1 discloses a low-temperature firing treatment using a paste containing a reduced amount of an organic binder. The paste disclosed in Patent Literature 1, however, has a low viscosity and thus has difficulty in maintaining the shape thereof in printing, disadvantageously resulting in uneven thickness of the film or a collapse of the edge shape. When the paste is printed in a fine wiring pattern, wires stick to each other.

A solvent to be used with ethyl cellulose as an organic binder is a lower alcohol or a solvent mixture of a lower alcohol and a high-viscosity solvent such as terpineol. Still, in printing, the paste is exposed to the outside for a long time or receives a strong external force such as a shearing force from devices such as a plate and a squeegee. Thus, in some cases, the dispersion medium may evaporate before the paste is printed so that the viscosity of the paste may increase and the printability may vary, resulting in difficulty in stable production.

For dye-sensitized solar cells, a titanium oxide layer preferably adsorbs as large an amount of sensitizing dye as possible so as to improve the photoelectric conversion efficiency. Still, disadvantageously, a paste containing a conventional organic binder adsorbs an insufficient amount of sensitizing dye or takes a long time to adsorb sensitizing dye.

### CITATION LIST

### - Patent Literature

Patent Literature 1: JAPANESE PATENT No. 4801899

### SUMMARY OF INVENTION

### - Technical Problem

The present invention aims to provide a titanium oxide paste which is excellent in printability and which allows for production of a porous titanium oxide layer having a high porosity with a small amount of impurities on the surface thereof even by low-temperature firing, a method of producing a porous titanium oxide laminate using the titanium oxide paste, and a dye-sensitized solar cell.

### - Solution to Problem

The present invention relates to a titanium oxide paste containing titanium oxide particles, a (meth)acrylic resin, and an organic solvent, the paste having a viscosity of 15 to 50 Pa·s and a thixotropic ratio of 2 or greater, and a dried mass obtained by heating the paste at a temperature-increasing rate of 10°C/min from 25°C to 300°C in the atmospheric environment containing 1% by weight or less of the (meth)acrylic resin and the organic solvent.

The present invention will be described in detail below.

The present inventors have performed studies to find that a paste which contains titanium oxide particles, a (meth)acrylic resin, and an organic solvent and which satisfies that the viscosity and the thixotropic ratio thereof and the amount of the above organic components after heating the paste are each within a predetermined range allows for production of a porous titanium oxide layer having a high porosity with a small amount of impurities on the surface thereof even by low-temperature heating while the printability of the paste is maintained, and thus such a paste can exert a high photoelectric conversion efficiency when it is used as a material for a dye-sensitized solar cell, for example.

The present inventors have further found that a dye-sensitized solar cell produced using such a titanium oxide paste allows for sufficient adsorption of a sensitizing dye in a short time, thereby completing the present invention.

The titanium oxide paste of the present invention contains titanium oxide particles. Titanium oxide is suitably used because it has a wide band gap and the resource thereof is relatively rich.

Common examples of the titanium oxide particles include rutile titanium oxide particles, anatase titanium oxide particles, brookite titanium oxide particles, and modified titanium oxide particles of these crystalline titanium oxides.

The average particle size of the titanium oxide particles is preferably at least 1 nm and at most 50 nm, and more preferably at least 5 nm and at most 25 nm. An average particle size within the above range may allow the resulting porous titanium oxide layer to have a sufficient specific surface area. Further, such an average particle size may prevent electron-hole recombination. Two or more kinds of particles having different particle size distributions may be used in combination.

The titanium oxide particles are preferably used in an amount of at least 5% by weight and at most 75% by weight in the titanium oxide paste. Less than 5% by weight of the particles may fail to give a sufficiently thick porous titanium oxide layer. More than 75% by weight of the particles may give an excessive viscosity to the resulting paste, preventing smooth printing. The amount of the particles is more preferably at least 10% by weight and at most 50% by weight. The amount thereof is still more preferably at least 20% by weight and at most 35% by weight.

The titanium oxide paste of the present invention contains a (meth)acrylic resin. Since the (meth)acrylic resin is excellent in low-temperature degradability, the titanium oxide paste leaves a small amount of organic residues even after low-temperature firing. Also, the (meth)acrylic resin is low in viscous characteristics, and thus the paste greatly suppresses a change in viscous characteristics even if the solvent is evaporated in the working environment. This leads to stable printing.

The (meth)acrylic resin may be any of those degradable at a temperature as low as about 300°C. Suitably used is a polymer polymerized at least one kind of monomer selected from the group consisting of methyl (meth)acrylate, ethyl (meth)acrylate, propyl (meth)acrylate, n-butyl (meth)acrylate, tert-butyl (meth)acrylate, isobutyl (meth)acrylate, cyclohexyl (meth)acrylate, 2-ethylhexyl (meth)acrylate, isobornyl (meth)acrylate, n-stearyl (meth)acrylate, benzyl (meth)acrylate, and (meth)acrylic monomers having a polyoxyalkylene structure. The term "(meth)acrylate" herein means an acrylate or a methacrylate, for example.

The (meth)acrylic resin is preferably a polymer of a (meth)acrylate having two or more carbon atoms in the ester residue or a polymer of a (meth)acrylate having a branched alkyl group in the ester residue. Particularly preferred is polyisobutyl methacrylate (an isobutyl methacrylate polymer) that is a polymer of methyl methacrylate which has a high glass transition temperature (Tg) and which is excellent in low-temperature calcinability because even a small amount of this polymer can provide a high viscosity.

The (meth)acrylic resin has a weight average molecular weight in terms of polystyrene of at least 5000 and at most 500000. With a weight average molecular weight of less than 5000, the resin may fail to give sufficient viscosity to the resulting paste, so that the paste is inappropriate for printing. With a weight average molecular weight of more than 500000, the resin gives a high adhesive force to the resulting titanium oxide paste of the present invention, so that the paste is stringy, for example, and poor in printability. The weight average molecular weight is preferably at most 100000, and more preferably at most 50000. The weight average molecular weight in terms of polystyrene can be determined by GPC, for example using a column LF-804 (SHOKO Scientific Co., Ltd.) as a column.

The (meth)acrylic resin may be used in any amount in the titanium oxide paste of the present invention, and the amount of the resin is preferably at least 10% by weight and at most 50% by weight. Less than 10% by weight of the (meth)acrylic resin may give an insufficient viscosity to the titanium oxide paste, deteriorating the printability. More than 50% by weight thereof may give too high a viscosity and adhesive force to the titanium oxide paste, deteriorating the printability.

The amount of the (meth)acrylic resin is preferably smaller than that of the titanium oxide particles. If the amount of the (meth)acrylic resin is larger than that of the titanium oxide particles, a large amount of the (meth)acrylic resin may remain after heating.

In addition to the (meth)acrylic resin, the titanium oxide paste of the present invention may contain another binder resin in a small amount such that the binder resin leaves no impurities on the surface even after low-temperature firing. Examples of the binder resin include polyvinyl alcohol (PVA), polyvinyl butyral (PVB), polyethylene glycol, polystyrene, and polylactide.

The titanium oxide paste of the present invention contains an organic solvent. The organic solvent is preferably one which excellently dissolves the (meth)acrylic resin and which has a high polarity. Examples thereof include terpene solvents such as α-terpineol and γ-terpineol; alcohol solvents such as ethanol and isopropyl alcohol; polyalcohol solvents such as diol and triol; solvent mixtures such as alcohol solvent/hydrocarbon; and hetero compounds such as dimethyl formamide, dimethyl sulfoxide, and tetrahydrofuran. Particularly preferred are terpene solvents.

The organic solvent preferably has a boiling point of 100°C to 300°C. If the boiling point of the organic solvent is lower than 100°C, the resulting titanium oxide paste may easily dry during printing, resulting in problems when the paste is used in long-term continuous printing. If the boiling point exceeds 300°C, the resulting titanium oxide paste is less easily dried during a drying process after the printing. The "boiling point" herein means a boiling point under atmospheric pressure.

The amount of the organic solvent is preferably at least 55% by weight and at most 74% by weight. Less than 55% by weight of the organic solvent may give a high viscosity to the resulting titanium oxide paste, deteriorating the printability. More than 74% by weight of the organic solvent may give too low a viscosity to the resulting titanium oxide paste, deteriorating the printability. The amount thereof is more preferably at least 60% by weight and at most 70% by weight.

The titanium oxide paste of the present invention has a viscosity of at least 15 Pa·s and at most 50 Pa·s. With a viscosity of lower than 15 Pa·s, the paste has difficulty in maintaining the shape during printing. With a viscosity exceeding 50 Pa·s, the titanium oxide paste is poor in coating capability. The viscosity is preferably at least 17.5 Pa·s and at most 45 Pa·s.

The above viscosity is a kinematic viscosity measured using an E-type viscometer at 25°C under 10-rpm shearing.

The titanium oxide paste of the present invention has a thixotropic ratio of 2 or greater. With a thixotropic ratio of smaller than 2, the paste has difficulty in maintaining the shape after printing, resulting in uneven thickness of the film or a collapse of the edge shape. When the paste is printed in a fine wiring pattern, wires stick to each other. The thixotropic ratio is preferably at least 2.25 and at most 5. The thixotropic ratio can be determined by dividing the kinematic viscosity measured using an E-type viscometer at 25°C under 0.5-rpm shearing by the kinematic viscosity under 5-rpm shearing.

The titanium oxide paste of the present invention preferably satisfies that the rate of change in viscosity after repeating a squeegee operation 25 times at normal temperature under atmospheric pressure is 105% or lower. If the rate of change in viscosity exceeds 105%, the printability may vary, resulting in difficulty in stable production.

The rate of change in viscosity is a proportion of the viscosity after repeating the following operation 25 times to the viscosity before repeating the operation, the operation including: placing a titanium oxide paste on a glass; thinly spreading the titanium oxide paste on the glass surface using a rubber squeegee; and then scraping the paste. Each viscosity is a kinematic viscosity measured using an E-type viscometer at 25°C under 10-rpm shearing.

The titanium oxide paste of the present invention satisfies that a dried mass obtained by heating the paste at a temperature-increasing rate of 10°C/min from 25°C to 300°C in the atmospheric environment contains 1% by weight or less of the (meth)acrylic resin and the organic solvent.

Since the titanium oxide paste of the present invention leaves a small amount of impurities on the surface thereof after heating, the particles easily bond to each other (this is referred to as necking), resulting in a low resistance between the particles. Thus, the titanium oxide paste used as a material for dye-sensitized solar cells exerts a high photoelectric conversion efficiency.

If the dried mass obtained by heating the paste contains more than 1% by weight of the above components, impurities remain on the surface of the titanium oxide particles, so that the particles fail to adsorb a sensitizing dye. Here, the amount of the components is relative to the weight of the titanium oxide particles.

The titanium oxide paste of the present invention not only has excellent printability but also allows for suitable production of a porous titanium oxide layer having a high porosity with a small amount of impurities on the surface thereof even by low-temperature firing.

Since the titanium oxide paste of the present invention is excellent in compatibility with an organic solvent which is usually used in washing a screen plate and can be sufficiently washed off after the use, the paste less clogs up the screen plate, resulting in stable screen printing for a long time.

When the titanium oxide paste of the present invention is used as a material for dye-sensitized solar cells, it allows for sufficient adsorption of a sensitizing dye in a short time and the resulting dye-sensitized solar cell exerts a high photoelectric conversion efficiency.

The titanium oxide paste of the present invention may be produced by a method of mixing titanium oxide particles, a (meth)acrylic resin, and an organic solvent. The mixing may be performed using, for example, a two roll mill, a three roll mill, a bead mill, a ball mill, a disperser, a planetary mixer, a planetary centrifugal mixer, a kneader, an extruder, a mix rotor, a stirrer, or the like.

The following method of producing a porous titanium oxide laminate is also one aspect of the present invention; the method includes: printing the titanium oxide paste of the present invention on a base to form a titanium oxide paste layer on the base; and firing the titanium oxide paste layer to thereby sinter the titanium oxide particles to form a porous titanium oxide layer on the base.

The method of producing a porous titanium oxide laminate of the present invention includes printing the titanium oxide paste of the present invention on a base to form a titanium oxide paste layer on the base.

The titanium oxide paste may be printed on a base by any method, and screen printing is preferred.

In the screen printing, the mesh size of a screen plate, the attack angle of a squeegee, the rate of moving a squeegee, the force of pressing a squeegee, and the like factors are preferably adjusted as appropriate.

In the case of using the titanium oxide paste of the present invention as a material for dye-sensitized solar cells, the printing of the titanium oxide paste on a base is performed such that the titanium oxide paste is applied to a transparent conductive layer formed on a transparent substrate.

The transparent substrate may be any transparent substrate, and examples thereof include glass substrates such as silicate glass. The glass substrate may be chemically or thermally reinforced. Various plastic substrates may be used as long as they ensure the light permeability.

The transparent substrate is preferably 0.1 to 10 mm, more preferably 0.3 to 5 mm, in thickness.

Examples of the transparent conductive layer include layers formed from a conductive metal oxide such as In₂O₃ and SnO₂ and layers formed from a conductive material such as a metal. Examples of the conductive metal oxide include In₂O₃:Sn (ITO), SnO₂:Sb, SnO₂:F, ZnO:Al, ZnO:F, and CdSnO₄.

The method of producing a porous titanium oxide laminate of the present invention includes sintering the titanium oxide particles to form a porous titanium oxide layer on the base.

The temperature, the period of time, the atmosphere, and the like conditions for sintering the titanium oxide particles may appropriately be adjusted in accordance with such factors as the type of a base to be coated with the paste. For example, the particles are preferably sintered in the atmospheric environment or in an inert gas environment within an approximate temperature range of 50°C to 800°C for about 10 seconds to about 12 hours. The particles may be dried and fired simultaneously in one step at a single temperature or in two or more steps at different temperatures.

The resulting porous titanium oxide laminate is allowed to adsorb a sensitizing dye. Then, the laminate is disposed so as to oppose to a counter electrode, and an electrolyte layer is formed between these electrodes, thereby producing a dye-sensitized solar cell. The resulting dye-sensitized solar cell exerts a high photoelectric conversion efficiency. The sensitizing dye may be adsorbed by, for example, a method of immersing the porous titanium oxide laminate in an alcohol solution that contains a sensitizing dye and then evaporating the alcohol.

Examples of the sensitizing dye include ruthenium dyes such as ruthenium-tris dyes and ruthenium-bis dyes, and organic dyes such as phthalocyanine, porphyrin, cyanidin dyes, merocyanine dyes, rhodamine dyes, xanthene dyes, and triphenyl methane dyes.

### - Advantageous Effects of Invention

The present invention can provide a titanium oxide paste which is excellent in printability and which allows for production of a porous titanium oxide layer having a high porosity with a small amount of impurities on the surface thereof even by low-temperature firing, a method of producing a porous titanium oxide laminate using the titanium oxide paste, and a dye-sensitized solar cell.

### BRIEF DESCRIPTION OF THE DRAWINGS

Fig. 1 is a microscopic picture showing the shape of a porous titanium oxide layer in Example 2.
Fig. 2 is a microscopic picture showing the shape of a porous titanium oxide layer in Comparative Example 3.
Fig. 3 is a microscopic picture showing the shape of a porous titanium oxide layer in Comparative Example 6.
Fig. 4 shows a sample of a smooth-surface sintered film in the evaluation of film formability after repeated printing.
Fig. 5 shows a sample of a rough-surface sintered film in the evaluation of film formability after repeated printing.

### DESCRIPTION OF EMBODIMENTS

The present invention will be described in detail below referring to, but not limited to, examples.

### (Example 1)

### (Production of titanium oxide paste)

Titanium oxide particles having an average particle size of 20 nm, an isobutyl methacrylate polymer (weight average molecular weight: 50000) as an organic binder, and α-terpineol (boiling point: 219°C) as an organic solvent were uniformly mixed using a bead mill, thereby providing a titanium oxide paste having the composition shown in Table 1.

### (Formation of porous titanium oxide layer)

The resulting titanium oxide paste was printed in a 5-mm-square shape on a glass substrate having a 25-mm-square FTO transparent electrode formed thereon, and then fired at 300°C for one hour, thereby providing a porous titanium oxide layer. The printing conditions were finely adjusted such that the porous titanium oxide layer was 10 µm in thickness.

### (Production of dye-sensitized solar cell)

The resulting substrate having the porous titanium oxide layer was immersed in a solution of a Ru complex dye (N719) in acetonitrile:t-butanol (= 1:1, concentration: 0.3 mM) for one day, thereby allowing the porous titanium oxide layer to adsorb the sensitizing dye on the surface.

Next, a 30-µm-thick Himilan film was disposed on the substrate so as to enclose the porous titanium oxide layer except for one side of the layer, and a glass substrate having a platinum electrode deposited thereon was disposed on the film. A solution of lithium iodide and iodine in acetonitrile was charged into the gap, and the open side was closed, thereby providing a dye-sensitized solar cell.

### (Examples 2 to 6)

A titanium oxide paste, a porous titanium oxide layer, and a dye-sensitized solar cell were produced in the same manner as in Example 1 except that the amounts of the titanium oxide particles, the organic binder, and the organic solvent(s) were different from those in (Production of titanium oxide paste) of Example 1 as shown in Table 1.

In addition to α-terpineol (boiling point: 219°C), 2,4-diethyl-1,5-pentane diol (PD-9, boiling point: 264°C) and ethanol (boiling point: 78°C) were also used as organic solvents.

### (Comparative Examples 1 and 2)

A titanium oxide paste, a porous titanium oxide layer, and a dye-sensitized solar cell were produced in the same manner as in Example 1 except that ethyl cellulose (Wako Pure Chemical Industries, Ltd., 45% ethoxy, 10 cP) was used as an organic binder instead of the isobutyl methacrylate polymer and the amounts of the respective components were different from those in (Production of titanium oxide paste) of Example 1 as shown in Table 1.

### (Comparative Examples 3 to 9)

A titanium oxide paste, a porous titanium oxide layer, and a dye-sensitized solar cell were produced in the same manner as in Example 1 except that the amounts of the titanium oxide particles, the organic binder, and the organic solvent(s) were different from those in (Production of titanium oxide paste) of Example 1 as shown in Table 1.

### <Evaluations>

The titanium oxide pastes, the porous titanium oxide layers, and the dye-sensitized solar cells produced in the respective examples and comparative examples were evaluated as follows. Table 1 shows the results.

### (1) Measurement of viscosity and thixotropic ratio

The kinematic viscosity of the resulting titanium oxide paste was measured using an E-type viscometer (TVE25H, Toki Sangyo Co., Ltd.) at 25°C under 10-rpm shearing, thereby determining the viscosity.

Further, the thixotropic ratio was determined by dividing the kinematic viscosity under 0.5-rpm shearing by the kinematic viscosity under 5-rpm shearing. The viscosity was also measured after repeating the following operation 25 times, the operation including: placing the resulting titanium oxide paste on a glass; thinly spreading the titanium oxide paste on the glass surface using a rubber squeegee; and then scraping the paste. Thereafter, the rate of change between the viscosities before and after the squeegee operations was calculated.

### (2) Measurement of amount of residue after firing

The resulting titanium oxide paste was heated at a temperature-increasing rate of 10°C/min to 300°C in the atmospheric environment, and the amount of the residual components (the sum of the amounts of the (meth)acrylic resin and the organic solvent after the firing) relative to the weight of the titanium oxide was determined by thermogravimetry (TG) (TG/DTA 6300, Seiko Instruments Inc.) based on the difference between the amount of the solid titanium oxide particles in the titanium oxide paste and the amount of the resulting TG residue.

### (3) Evaluation of shape of porous titanium oxide layer

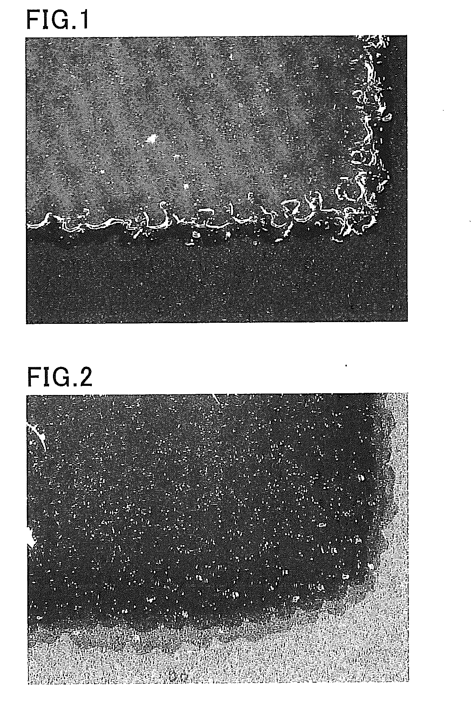

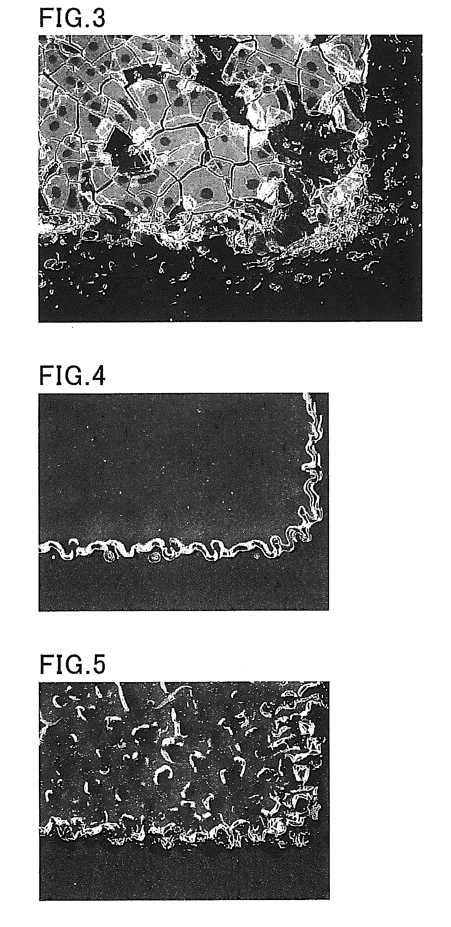

The edge of the resulting porous titanium oxide layer was observed using an optical microscope (ME600, Nikon Corp.). The layer maintaining the shape was evaluated as "○", whereas the layer with a collapsed shape was evaluated as "×". The microscopic picture showing the shape of the porous titanium oxide layer in Example 2 was Fig. 1, the microscopic picture showing the shape of the porous titanium oxide layer in Comparative Example 3 was Fig. 2, and the microscopic picture showing the shape of the porous titanium oxide layer in Comparative Example 6 was Fig. 3.

### (4) Measurement of amount of dye adsorbed by porous titanium oxide layer

The porous titanium oxide layer adsorbing the sensitizing dye obtained in (Production of dye-sensitized solar cell) of Example 1 was immersed in a potassium hydroxide solution so that the sensitizing dye was desorbed. The absorption spectrum of the desorbing solution was measured using a spectrophotometer (U-3000, Hitachi, Ltd.), thereby determining the amount of the dye adsorbed. Table 1 shows the standardized absorption spectra with the value at 500 nm in Comparative Example 1 being defined as 1.00.

### (5) Measurement of mobility of porous titanium oxide layer

The Hall mobility of the resulting porous titanium oxide layer was measured using a Hall effect measurement device (ResiTest 8300, TOYO Corp.), and thereby the state of necking was alternatively evaluated. Here, the Hall mobility of a titanium oxide crystal is 10 cm²/V·s or higher. Thus, the closer the measured value is to this Hall mobility, in other words, the greater the measured value is, the more the necking proceeds and the lower the resistance between the particles is.

Table 1 shows the standardized Hall mobility values with the value in Comparative Example 1 being defined as 1.00.

### (6) Evaluation of performance of dye-sensitized solar cell

A power source (Model 236, Keithley Instruments Inc.) was connected between the electrodes of the resulting dye-sensitized solar cell, and the photoelectric conversion efficiency of the dye-sensitized solar cell was measured using a solar simulator (YAMASHITA DENSO CORP.) with an intensity of 100 mW/cm². Table 1 shows the standardized conversion efficiencies and short-circuit current densities with the values in Comparative Example 1 each being defined as 1.00. The conversion efficiency was also measured after repeating the following operation 25 times, the operation including: placing the resulting titanium oxide paste on a glass; thinly spreading the titanium oxide paste on the glass surface using a rubber squeegee; and then scraping the paste. Thereafter, the rate of change in conversion efficiency was calculated.

### (7) Dye-adsorbing time

The amount of the dye adsorbed after 6-hour immersion and that after 12-hour immersion in (Production of dye-sensitized solar cell) of Example 1 were evaluated, with the amount of the dye adsorbed after immersion in a solution of Ru complex dye (N719) in acetonitrile:t-butanol (= 1:1, concentration: 0.3 mM) for one day (24 hours) being defined as 1.00. The amount of the dye adsorbed was measured in the same manner as in "(4) Measurement of amount of dye adsorbed by porous titanium oxide layer".

### (8) Film formability after repeated printing

Screen printing was repeated 100 times using the resulting titanium oxide paste, and then the screen plate was washed with isopropyl alcohol. This cycle was repeated 10 times. Then, the titanium oxide paste was printed and fired such that the film was 10 µm in thickness after the firing. The shape of the sintered film was observed using an optical microscope.

The resulting sintered film having a smooth surface as shown in Fig. 4 was evaluated as "○", whereas the resulting sintered film having a rough surface as shown in Fig. 5 was evaluated as "×". The rough surface formed on the sintered film is presumably due to the marks of a screen mesh as a result of clogging of the screen plate.

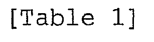

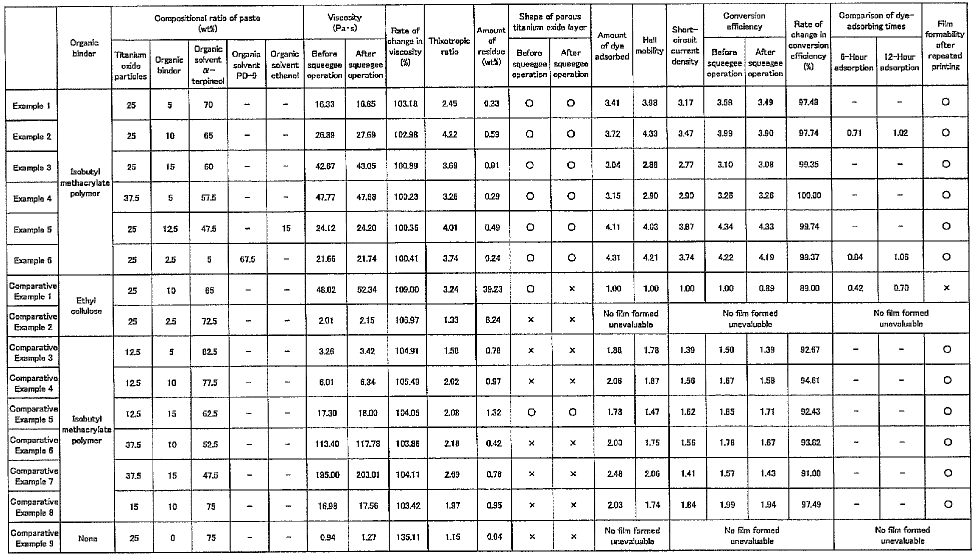

### INDUSTRIAL APPLICABILITY

The present invention can provide a titanium oxide paste which is excellent in printability and which allows for production of a porous titanium oxide layer having a high porosity with a small amount of impurities on the surface thereof even by low-temperature firing, a method of producing a porous titanium oxide laminate using the titanium oxide paste, and a dye-sensitized solar cell.

## Claims

1. A titanium oxide paste comprising:
titanium oxide particles; a (meth)acrylic resin; and an organic solvent,
the paste having a viscosity of 15 to 50 Pa·s and a thixotropic ratio of 2 or greater, and
a dried mass obtained by heating the paste at a temperature-increasing rate of 10°C/min from 25°C to 300°C in an atmospheric environment containing 1% by weight or less of the (meth)acrylic resin and the organic solvent.

2. The titanium oxide paste according to claim 1,
wherein the (meth)acrylic resin is polyisobutyl methacrylate.

3. The titanium oxide paste according to claim 1 or 2,
wherein the organic solvent has a boiling point of 100°C to 300°C.

4. A method of producing a porous titanium oxide laminate, comprising:
printing the titanium oxide paste according to claim 1, 2, or 3 on a base to form a titanium oxide paste layer on the base; and
firing the titanium oxide paste layer to thereby sinter the titanium oxide particles to form a porous titanium oxide layer on the base.

5. A dye-sensitized solar cell, comprising
a porous titanium oxide laminate produced by the method according to claim 4.

## Amended claims

### Amended claims under Art. 19.1 PCT

**1.** (Amended) A titanium oxide paste comprising:
titanium oxide particles; a (meth)acrylic resin; and an organic solvent,
the (meth)acrylic resin being polyisobutyl methacrylate,
the paste having a viscosity of 15 to 50 Pa·s and a thixotropic ratio of 2 or greater, and
a dried mass obtained by heating the paste at a temperature-increasing rate of 10°C/min from 25°C to 300°C in an atmospheric environment containing 1% by weight or less of the (meth)acrylic resin and the organic solvent.

**2.** (Canceled)

**3.** (Amended) The titanium oxide paste according to claim 1,
wherein the organic solvent has a boiling point of 100°C to 300°C.

**4.** (Amended) A method of producing a porous titanium oxide laminate, comprising:
printing the titanium oxide paste according to claim 1 or 3 on a base to form a titanium oxide paste layer on the base; and
firing the titanium oxide paste layer to thereby sinter the titanium oxide particles to form a porous titanium oxide layer on the base.

**5.** A dye-sensitized solar cell, comprising
a porous titanium oxide laminate produced by the method according to claim 4.
